# FASCICULE DE BREVET EUROPEEN

(11) **EP 4 424 598 B1**
(45) Date de publication et mention de la délivrance du brevet: **21.10.2026**
(21) Numéro de dépôt: 24160918.9
(22) Date de dépôt: 01.03.2024
(51) Int. Cl.: B64D 11/06, B60N 2/34, B60N 2/22

(54) **SIEGE MANUELLEMENT CONVERTIBLE POUR PASSAGER D'AERONEF**
MANUELL UMWANDELBARER SITZ FÜR FLUGZEUGPASSAGIERE
MANUALLY CONVERTIBLE SEAT FOR AN AIRCRAFT PASSENGER

(30) Priorité: 02.03.2023 FR 2301975
(43) Date de publication de la demande: 04.09.2024
(73) Titulaire: Airbus Atlantic, 17300 Rochefort (FR)
(72) Inventeur: CLOET, Frédéric, 17300 ROCHEFORT (FR); VIGNON, Laurent, 17300 ROCHEFORT (FR); TRILLAUD, Benoît, 17300 ROCHEFORT (FR)
(74) Mandataire: Santarelli

(56) Documents cités:
- EP-A1- 4 074 600
- EP-B1- 0 234 438
- EP-B1- 0 404 628
- EP-B1- 3 480 111
- WO-A1-2012/024159
- FR-A- 696 380
- US-A1- 2021 323 679

## Description

### DOMAINE TECHNIQUE

La présente invention appartient au domaine des sièges pour passagers d'aéronefs, notamment les sièges convertibles en lit utilisés dans les classes supérieures (classe affaires et première classe), et concerne plus particulièrement un siège manuellement convertible, sans motorisation, grâce à un mécanisme facilement actionnable par une action physique du passager.

La présente invention vise ainsi des économies d'énergie et de masse dans les avions de transport de passagers, et donc une réduction des coûts d'exploitation des compagnies aériennes.

### ÉTAT DE L'ART

Les sièges convertibles pour passagers d'aéronefs, tels que les avions de ligne, sont bien connus et largement répondus, avec de nombreux fabricants proposant différentes solutions. Ces sièges, également appelés « fauteuils », sont généralement conçus pour offrir plusieurs positions au passager, notamment les positions assises et couchées, ainsi que des positions inclinées intermédiaires pour plus de confort.

Les sièges convertibles sont, de ce fait, des équipements importants pour garantir le confort des passagers lors de vols de longue durée. Cependant, les solutions actuelles pour la conversion des sièges d'une position assise à une position couchée impliquent souvent l'utilisation de mécanismes motorisés complexes qui présentent des inconvénients significatifs.

Ces mécanismes motorisés nécessitent parfois des conceptions mécaniques et électriques sophistiquées, avec des pièces essentielles telles que des moteurs électriques, des engrenages de réduction, des arbres de transmission, etc. Les ingénieurs doivent considérer de nombreux facteurs, tels que la fiabilité, la durabilité, le poids et le coût, lors de la conception de ces systèmes complexes. Par exemple, les moteurs électriques utilisés doivent être suffisamment puissants pour effectuer l'opération de conversion, tout en étant suffisamment petits et légers pour ne pas ajouter de poids supplémentaire à l'avion.

En outre, les mécanismes motorisés sont souvent plus sujets aux pannes que des mécanismes qui ne seraient pas motorisés, ce qui peut entraîner des retards de vol coûteux et des désagréments pour les passagers. En cas de panne, la réparation d'un mécanisme motorisé peut être complexe et nécessiter un temps d'intervention important.

Il existe de nombreuses solutions dans le domaine des sièges convertibles, avec majoritairement des perfectionnements mineurs à un principe de base commun. Ces perfectionnement peuvent par exemple concerner la combinaison des mouvements des différentes parties mobiles du siège (assise, dossier, repose-jambes, etc.), la synchronisation de ces mouvements, la réduction du bruit des mécanismes de conversion, la facilité d'utilisation par le passager, etc.

Le document EP1044878A2 décrit un siège convertible pour passager d'avion comprenant une partie fixe pour supporter le siège de manière adjacente à un plancher de l'avion ; une partie mobile comprenant une assise et un dossier ; des moyens de guidage pour guider le mouvement de la partie mobile par rapport à la partie fixe entre une position verticale et une position complètement inclinée ; et des moyens d'entraînement actionnables sélectivement pour entraîner un mouvement progressif de la partie mobile entre lesdites positions. Dans cette solution les moyens de guidage comprennent au moins une piste allongée prévue sur la partie fixe, laquelle piste est équipée d'une crémaillère ; et les moyens d'entraînement comprennent un pignon qui s'engage avec la crémaillère et une unité d'entraînement et de verrouillage pour entraîner le pignon. L'unité d'entraînement et de verrouillage comprend un moteur électrique à fonctionnement sélectif qui est monté sur le dossier, lequel moteur est adapté pour entraîner deux arbres d'entraînement sensiblement coaxiaux, chaque arbre d'entraînement portant un pignon à une extrémité de l'arbre éloignée du moteur.

Cette solution a pour but de surmonter quelques défauts des sièges antérieurs, mais elle fait également appel à une conception complexe qui présente les mêmes inconvénients que ceux discutés plus haut. De plus, le mécanisme proposé ne garantit pas une bonne synchronisation des mouvements de la partie mobile.

Le document EP1352828A1 décrit quant à lui un siège convertible pour passager d'avion, comprenant un dossier et une assise montée pivotante par rapport au dossier, une structure de support de l'assise et du dossier, le dossier étant relié à la structure de support par une liaison pivot, ainsi qu'un repose-jambes relié par une liaison pivot à l'extrémité avant de l'assise. Ce siège comporte des moyens mécaniques de synchronisation aptes à synchroniser les mouvements du dossier et du repose-jambes. Ce siège comporte également des moyens de commande qui comprennent un boîtier de commande électronique coopérant avec les actionneurs et coopérant en outre avec des moyens pouvant être actionnés par le passager pour régler la position du siège.

A l'image de l'état de l'art, cette solution propose un mécanisme motorisé commandé électroniquement et n'échappe pas aux inconvénients dus à cette motorisation.

Le document US2021323679A1 décrit un siège d'avion comprenant un ensemble supérieur, un ensemble inférieur et un ensemble d'actionnement configuré pour actionner l'ensemble supérieur par rapport à l'ensemble inférieur. L'ensemble inférieur comprend au moins un ressort couplé à une base avec une surface d'actionnement inclinée configurée pour faire en sorte que l'ensemble supérieur soit à une hauteur réduite lorsqu'il est dans une position de lit. La compression de ce ressort peut être configurée pour contrebalancer une charge à l'intérieur du siège d'avion et générer un actionnement contrôlé de l'ensemble supérieur d'une position verticale à la position de lit. Une force de rappel fournie par le ressort peut aider l'ensemble d'actionnement pendant l'actionnement de l'ensemble supérieur de la hauteur réduite de la position de lit à la position verticale.

Cette solution inclut une motorisation dans l'ensemble d'actionnement, mais comprend un ressort d'assistance pour contrôler la conversion du siège.

En dehors du domaine aéronautique, il existe des fauteuils convertibles, notamment des fauteuils de mobilier domestique ou de bureau qui peuvent être convertis en position allongée. Ces types de fauteuils sont généralement appelés "fauteuils de relaxation" ou "fauteuils de repos". Ils peuvent avoir différents mécanismes de conversion, tels que des mécanismes motorisés, des mécanismes manuels, ou des mécanismes hydrauliques.

Les fauteuils de relaxation motorisés utilisent souvent des moteurs électriques pour contrôler la position du dossier et du repose-pieds. Les utilisateurs peuvent régler la position en appuyant sur un bouton ou en utilisant une télécommande. Les fauteuils de relaxation manuels sont équipés de leviers de déverrouillage qui permettent aux utilisateurs de régler manuellement la position du dossier et du repose-pieds. Les fauteuils de relaxation hydrauliques utilisent un système de vérin hydraulique pour régler la position.

A la connaissance du demandeur, aucune solution ne propose un siège pour passager d'aéronef, convertible manuellement sans la moindre motorisation et préservant le même niveau de confort que celui recherché par les passagers des classes supérieures.

Il est donc devenu impératif de développer des sièges convertibles économiques en termes de coût et de masse, tout en garantissant un niveau de confort et de sécurité optimal pour les passagers. Une solution alternative consiste à concevoir un mécanisme de conversion manuelle simple et efficace, qui ne nécessite pas d'énergie électrique pour fonctionner.

En optant pour un tel mécanisme de conversion manuelle, il est possible de réduire considérablement les coûts et le poids total de l'aéronef, tout en améliorant la fiabilité et la durabilité du siège. Un tel système serait facile à entretenir et à réparer, tout en offrant aux passagers une expérience de voyage plus confortable et agréable.

Les documents EP3480111 B1, EP0404628B1 et FR696380A décrivent des sièges convertibles avec des mécanismes actionnables manuellement, mais ne comprennent aucun système de compensation pour assister le passager lors de la conversion. En effet, ces solutions peuvent comprendre des systèmes d'amortissement pour atténuer le mouvement, mais ces systèmes ne permettent pas d'assister le passager pour réaliser le mouvement de conversion.

### PRÉSENTATION DE L'INVENTION

La présente invention vise à pallier tout ou partie des inconvénients de l'art antérieur exposés ci-avant en proposant une solution 100% mécanique de siège convertible pour passager d'aéronef.

Un but de la présente invention est de pouvoir passer un fauteuil d'une position assise en position couchée (lit) confortable par une action intuitive, simple et aisée par des passagers de différents gabarits.

À cet effet, la présente invention a pour objet un siège convertible pour passager d'un aéronef, tel qu'un avion de ligne, comportant une assise et un dossier mobiles entre une position « assise » et une position « couchée », remarquable en ce qu'il comporte un mécanisme de conversion manuelle entre lesdites positions, actionnable par une action physique du passager au moyen d'un levier de déverrouillage, sans aucun apport d'énergie électrique, en ce que ledit mécanisme comprend des moyens de compensation d'effort pour assister le passager lors de la conversion du siège.

Le mécanisme de conversion manuelle peut être activé par le passager lui-même, à l'aide du levier de déverrouillage, pour passer d'une position à l'autre.

Les moyens de compensation d'effort pour assister le passager lors de la conversion du siège peuvent inclure des ressorts, des amortisseurs, des vérins hydrauliques ou pneumatiques, ou d'autres dispositifs pour aider à soulager la pression sur les articulations et les muscles du passager lorsqu'il passe d'une position à l'autre.

Avantageusement, le siège ne comprend aucun mécanisme motorisé pour actionner un quelconque mouvement de l'assise ou du dossier.

Selon un mode de réalisation, le mécanisme comprend, à chaque côté latéral du siège, un premier pignon fixé au dossier, un deuxième pignon couplé au premier pignon et une crémaillère coopérant avec le deuxième pignon pour entraîner en translation l'assise sous l'effet de la rotation du premier pignon.

Plus particulièrement, chaque deuxième pignon est étagé et comprend une roue de grand diamètre couplée à une crémaillère et une roue de petit diamètre couplée à un premier pignon.

Selon un mode de réalisation, les moyens de compensation d'effort comprennent un ressort à gaz fixé entre l'assise et le dossier pour assister le passager dans un mouvement de rotation dudit dossier.

Selon un mode de réalisation, les moyens de compensation d'effort comprennent au moins un ressort de traction fixé entre l'assise et une structure fixe du siège pour assister le passager dans un mouvement de translation de ladite assise.

Selon un mode de réalisation, le mécanisme comprend en outre un moyen de blocage fixé entre l'assise et le dossier pour maintenir le siège à n'importe quelle position entre la position assise et la position couchée.

Par exemple, le moyen de blocage est un positionneur linéaire.

La présente invention a également pour objet une unité de siège pour passager d'un aéronef, comprenant un siège tel que présenté, un élément d'extension comprenant un ottoman et une coque de séparation.

La présente invention a également pour objet un aéronef comprenant au moins une telle unité de siège.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un siège manuellement convertible pour passager d'aéronef, conforme aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à l'échelle. Sur l'ensemble des figures, les éléments identiques ou équivalents portent la même référence numérique.

Il est ainsi illustré en :
- Figure 1 : des vues en perspective d'un siège manuellement convertible selon un mode de réalisation de l', dans différentes positions, assise en (a), intermédiaire en (b) et couchée en (c) ;
- Figure 2 : une vue en perspective arrière du siège sans ses éléments d'habillage, laissant apparaître le mécanisme de conversion manuelle ;
- Figure 3 : une vue légèrement de profil du siège montrant la coopération entre le jeu de pignons et la crémaillère ;
- Figure 4 : un schéma cinématique simplifié du siège avec quelques éléments optionnels ;
- Figure 5 : une vue partielle en perspective arrière du siège, avec le moyen de compensation en translation apparent ;
- Figure 6a : une représentation d'un passager installé dans une unité de siège comprenant le siège selon l'invention ;
- Figure 6b : une vue de détail partielle de la figure 6a ;
- Figure 7 : des vues de profil du siège avec son mécanisme de conversion apparent, dans différentes positions, assise en (a), intermédiaire en (b) et couchée en (c).

### DESCRIPTION DÉTAILLÉE DE MODES DE RÉALISATION

Il convient de noter que certains éléments techniques bien connus de l'homme du métier sont ici décrits pour éviter toute insuffisance ou ambiguïté dans la compréhension de la présente invention.

Dans le mode de réalisation décrit ci-après, on fait référence à un siège convertible manuellement entre au moins deux positions d'installation du passager, destiné principalement à l'aménagement de cabines d'avions. Cet exemple, non limitatif, est donné pour une meilleure compréhension de l'invention et n'exclut pas l'utilisation du siège dans d'autres moyens de transport adaptés.

Il convient de rappeler que l'objectif principal de la présente invention est de proposer une alternative pour s'affranchir des mécanismes traditionnels à motorisation électrique qui équipent actuellement les sièges convertibles des avions.

Dans la présente description, le terme « manuel » et les termes qui en sont dérivés désignent ce qui nécessite une action physique ou fait appel à l'intervention humaine pour être totalement accompli, par opposition à automatique. Ainsi, une conversion manuelle d'un siège désigne une conversion qui se fait entièrement par l'action physique du passager.

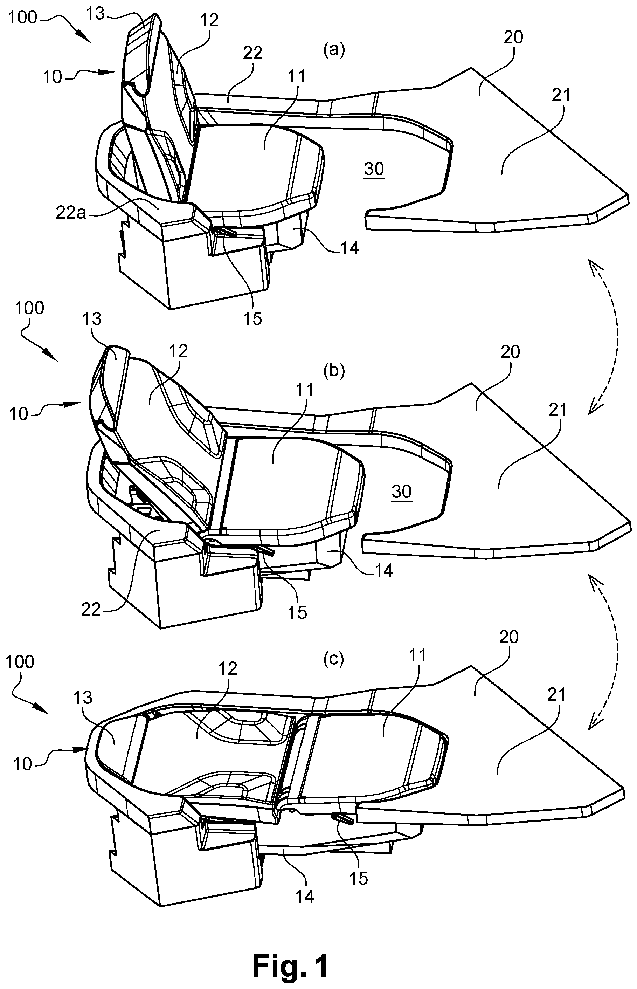

La figure 1 représente un siège 10 selon l'invention, dans une unité de siège 100 comprenant également un élément d'extension 20 et une coque de séparation non représentée.

Le siège 10 est manuellement convertible et peut occuper une position « assise », au moins une position intermédiaire dite « repos » et une position « couchée », lesdites positions étant respectivement représentées en (a), (b) et (c) sur la figure 1.

Toutes ces positions sont stables et le passage de l'une à l'autre s'effectue par un simple mouvement du passager comme il sera décrit plus loin.

Lorsqu'il est installé dans une cabine d'avion, le siège 10 est partiellement entouré par la coque de séparation qui définit un espace privatif du passager dans lequel sont agencés différentes commodités, comme il est d'usage dans le transport aérien en classes supérieures. Une telle coque de séparation de l'unité de siège est par exemple décrite dans le document EP4074600A1 au nom du demandeur.

De manière connue, le siège 10 comprend principalement une assise 11 et un dossier 12, tous deux mobiles de sorte que le siège 10 est convertible entre la position assise, dans laquelle le dossier 12 est redressé et forme un angle sensiblement perpendiculaire avec l'assise 11, et la position couchée, dans laquelle le dossier 12 est rabattu pour s'aligner avec un plan moyen de l'assise 11 et ainsi former une surface de couchage sensiblement horizontale faisant office de lit pour le passager.

Le siège 10 passe de la position assise à la position couchée, et inversement, de manière continue. Entre ces deux positions, le siège 10 peut occuper au moins une position repos, dans laquelle le dossier 12 est incliné par rapport à l'assise 11 d'un angle obtus plus ou moins important en fonction du niveau de confort recherché par le passager.

Lors d'une transition de la position assise vers la position couchée, le mouvement de l'assise 11 est principalement une translation vers l'avant suivant une direction longitudinale du siège 10, de la position (a) à la position (c) comme représenté sur la figure 1, tandis que le mouvement du dossier 12 est composé d'une translation curviligne vers le bas et d'une rotation autour d'un axe de basculement. Bien entendu, la transition inverse s'accompagne des mouvements respectifs inverses. Le siège 10 peut présenter une forme quelconque, de préférence optimisée pour occuper l'espace disponible et assurer le confort nécessaire au passager.

Le siège 10 comporte en outre un appui-tête 13 au-dessus du dossier 12 et une embase 14 supportant l'assise 11.

L'élément d'extension 20 présente une forme qui épouse celle du siège 10 dans au moins un plan transverse lorsque ce dernier est en position couchée, offrant ainsi une surface supplémentaire pour étendre la surface de couchage, au niveau des jambes par un ottoman 21 et au niveau des bras par des parties latérales 22. En position couchée du siège 10, l'assise 11, le dossier 12, l'appui-tête 13 et l'élément d'extension 20 sont sensiblement coplanaires.

En position assise ou repos, l'assise 11 du siège 10 reste écartée de l'élément d'extension 20, laissant ainsi un espace 30 par lequel le passager accède ou sort de son siège et dans lequel le passager met ses jambes lorsqu'il est assis.

Le siège 10 comporte un levier de déverrouillage 15 avec lequel le passager active la conversion manuelle du siège d'une position à l'autre.

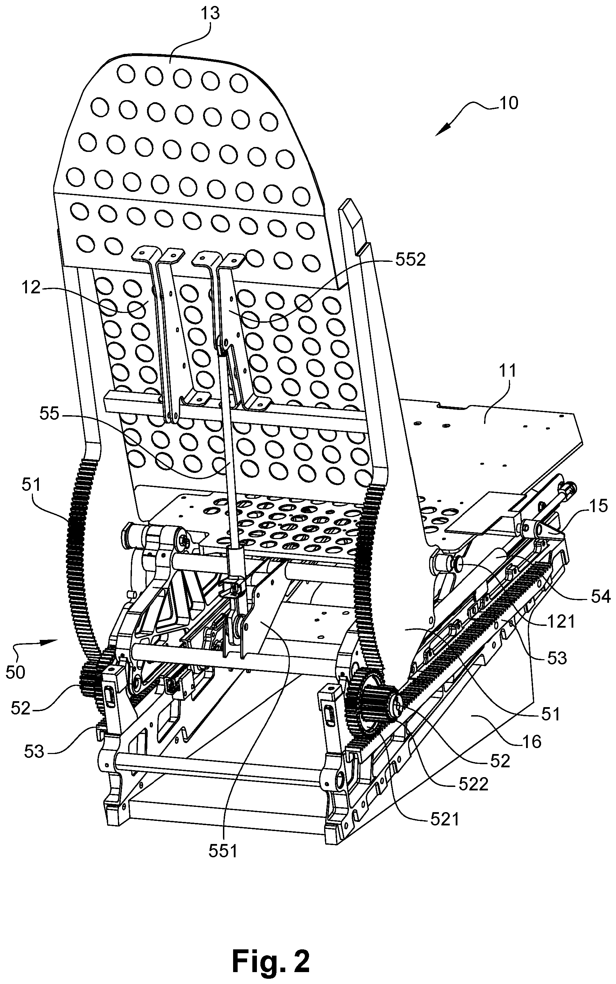

La figure 2 représente le siège 10 dépourvu des matelas et des panneaux d'habillage de sorte à laisser apparente sa structure interne et son mécanisme de conversion 50.

La structure est partielle dans la mesure où certains éléments non utiles à la description de l'invention ne sont pas représentés.

L'homme du métier disposera sans difficulté sur le siège qui est décrit les éléments nécessaires ou optionnels dans le cas d'une application particulière.

Le mécanisme 50 de conversion manuelle s'actionne par le levier de déverrouillage 15 qui libère le mouvement du siège 10, ledit mouvement étant provoqué par l'action physique du passager.

À cet effet, le mécanisme 50 comporte, à chaque côté latéral du siège 10, un jeu de pignons 51 et 52 assurant la liaison cinématique entre l'assise 11 et le dossier 12, une crémaillère 53 pour assurer la translation de l'assise 11 par roulement, et au moins un moyen de compensation 54 pour assister le passager lors du passage de la position couchée à la position assise.

Le mécanisme 50 comporte en outre un moyen de blocage 55, positionné dans une partie centrale du siège 10, pour verrouiller la position du siège à n'importe quelle position intermédiaire.

Afin de faciliter l'amorçage du mouvement de conversion de la position assise vers une position repos ou vers la position couchée directement, qui se fait par un simple appui dorsal du passager sur le dossier 12, l'assise 11 du siège 10 est inclinée pour caler le bassin du passager et éviter le glissement du passager vers l'avant.

Une rampe 16, grâce à une inclinaison positive d'angle α, permet ensuite de limiter l'accélération initiale des parties mobiles du siège 10 lors de cet amorçage.

L'appui dorsal du passager permet en effet d'enclencher le basculement du dossier 12 vers l'arrière et la translation de l'assise 11 vers l'avant. Ces deux mouvements s'effectuent simultanément en étant dépendant l'un de l'autre grâce au jeu de pignons 51 et 52 et à la crémaillère 53.

En effet, le siège 10 comporte deux premiers pignons 51 fixés au dossier 12 sur ses deux côtés latéraux. Ces premiers pignons 51 sont en portion de cercle, et le basculement du dossier 12 entraîne leur rotation. Chaque premier pignon 51 est couplé à un deuxième pignon 52 fixé à l'assise 11 et monté sur la crémaillère 53. La rotation des deux deuxièmes pignons 52, induite par la rotation des deux premiers pignons 51, provoque leur roulement sur les crémaillères 53 et donc la translation de l'assise 11.

Inversement, la translation de l'assise 11 induit le roulement des deuxièmes pignons 52 sur les crémaillères 53, et donc la rotation des premiers pignons 51 et du dossier 12 qui leur est solidaire.

Les pignons 51 et 52 sont ainsi dimensionnés pour faire correspondre à chaque inclinaison du dossier 12 une abscisse de l'assise 11 sur la direction longitudinale du siège 10, et pour obtenir un mouvement de conversion à des vitesses adaptées à l'usage des passagers.

En particulier, les deuxièmes pignons 52 sont étagés et comprennent chacun une roue de grand diamètre 521, coopérant avec le premier pignon 51 associé, et une roue de petit diamètre 522 coopérant avec la crémaillère 53 associée.

En résumé, l'assise 11 est montée sur la structure fixe du siège 10 par une liaison glissière matérialisée par un système pignon-crémaillère, et son mouvement est couplé au mouvement du dossier 12 pour un actionnement simultané.

Bien entendu, cette conception n'est pas limitative et peut être remplacée par d'autres conceptions assurant la même fonction.

Le levier de déverrouillage 15, lorsqu'il est actionné, permet de libérer le mouvement de l'assise 11 et du dossier 12 pour que le passager puisse déplacer le siège dans la position désirée. Autrement, le levier de déverrouillage 15 reste dans une position par défaut, de blocage du mouvement.

Le levier de déverrouillage 15 peut être réalisé de différentes façon, notamment par un élément de blocage relié à un ou plusieurs ressorts de maintien en position. Les passagers n'ayant pas tous le même gabarit, et malgré un dimensionnement dynamique adapté à la majorité des passagers suivant une moyenne statistiquement établie, la conversion est assistée par les moyens de compensation 54.

Les moyens de compensation 54 permettent en effet d'assister le passager, au moins lors des phases nécessitant le plus d'effort, dans la rotation du dossier 12. Selon l'exemple de réalisation illustré, les moyens de compensation 54 sont des ressorts à gaz dont les extrémités libres de leur tige et de leur chambre sont respectivement fixées à une structure d'assise 11 et à un premier pignon 51.

Les ressorts à gaz sont des vérins à gaz spécialement conçus pour fournir une force de compression constante et contrôlée pour répondre au besoin spécifique d'assistance à la conversion du siège, contrairement aux vérins classiques dont la force varie linéairement. Ces ressorts à gaz sont fabriqués à partir de matériaux de haute qualité, tels que l'acier inoxydable ou l'aluminium, pour offrir une durabilité et une résistance à la corrosion.

Dans chaque ressort à gaz 54 le vérin contient un ressort enroulé et un gaz sous pression, généralement de l'azote, qui est comprimé lorsque le vérin est enfoncé. Lorsque le vérin est relâché, le gaz se dilate et pousse le piston, fournissant une force constante et contrôlée pour un fonctionnement en douceur et en toute sécurité.

De ce fait, lors de la conversion du siège 10 vers la position couchée, le ressort à gaz 54 emmagasine de l'énergie potentielle qu'il restitue ensuite lors de la conversion inverse. Au vu de la fixation de chaque ressort à gaz 54, la force d'appui s'exerce sur les premiers pignons 51 avec un bras de levier favorable pour entraîner la rotation desdits premiers pignons par rapport à l'axe de basculement 121 du dossier 12.

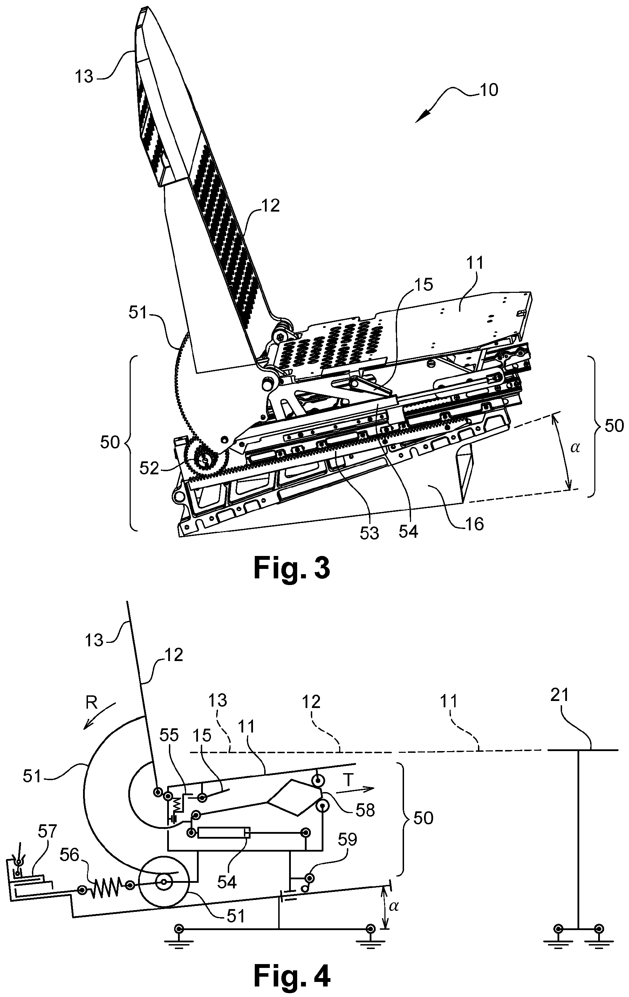

La figure 3 montre bien le positionnement des deux points d'appui du moyen de compensation 54, l'un étant sur une structure de l'assise 11 et l'autre sur le premier pignon 51. Les moyens de compensation 54 agissent donc sur le mouvement relatif de rotation du dossier 12 par rapport à l'assise 11 lors des conversions vers la position assise (redressement du dossier).

Le moyen de blocage 55, visible sur la figure 2, permet de maintenir le siège 10 dans n'importe quelle position entre la position assise et la position couchée.

Selon l'exemple de réalisation illustré, le système de blocage 55 est un positionneur linéaire. Il s'agit d'un dispositif de verrouillage mécanique utilisé pour fournir une force de maintien positive sur un vérin linéaire, empêchant ainsi tout déplacement indésirable du vérin lorsque celui-ci est en position fermée.

Le moyen de blocage 55 peut être utilisé avec une variété de vérins linéaires, notamment les vérins pneumatiques ou hydrauliques, et comporte un boîtier en deux parties, qui sont reliées par une tige filetée et une vis sans fin. Lorsque la vis sans fin est tournée, les deux parties du boîtier se déplacent vers ou loin de l'extrémité du vérin, fournissant une force de maintien sur le vérin pour le maintenir en position fermée.

Le positionneur linéaire utilisé dans l'exemple illustré permet un positionnement précis, mais présente un certain jeu fonctionnel. Dans la mesure où ce type de dispositif n'est pas obligatoire, d'autres dispositifs peuvent être utilisés pour le même effet technique de maintien du siège 10 dans toutes ses positions possibles. Le moyen de blocage 55 est placé à ses deux extrémités dans deux éléments de support, un support inférieur 551 et un support supérieur 552, fixés respectivement à l'assise 11 et au dossier 12.

Bien entendu, outre les moyens de compensation 54 et l'élément de blocage 55, le mécanisme 50 de conversion manuelle peut comporter d'autres éléments optionnels.

La figure 4 représente schématiquement la cinématique du siège 10, selon une vue de profil telle que celle de la figure 3, et permet d'en comprendre aisément le fonctionnement.

Le mécanisme 50 comprend en outre un autre moyen de compensation 56, pour assister le passager dans la translation de l'assise 11, un moyen de réglage 57 pour régler la position d'intervention dudit moyen de compensation, un moyen de réglage de l'inclinaison de l'assise 58 notamment pour l'incliner davantage en position repos et l'aligner horizontalement en position couchée, et un limiteur de vitesse 59 qui s'active en cas de déblocage à vide (sans le passager).

Le moyen de compensation en translation 56 comprend au moins un ressort de traction fixé entre la partie fixe du siège et l'assise 11. La conversion vers la position couchée permet de dilater le moyen de compensation qui, grâce à sa force de rappel, assite le passager lors de la conversion inverse, c'est-à-dire vers la position assise.

Le moyen de réglage 57 permet donc de régler la distance maximale de dilatation du moyen de compensation 56 et donc l'intensité de la force de rappel exercée sur l'assise 11, ou de débrailler totalement le moyen de compensation 56 pour qu'il ne soit pas activé lors de la conversion. Plus grande est cette distance de dilatation plus grande sera la force de rappel.

Le moyen de réglage 57 peut à cet effet comporter une butée déplaçable via une tige.

Il convient de noter que le moyen de compensation en translation 56 est particulièrement destiné aux passagers les plus lourds, et que certains passagers légers peuvent s'en passer.

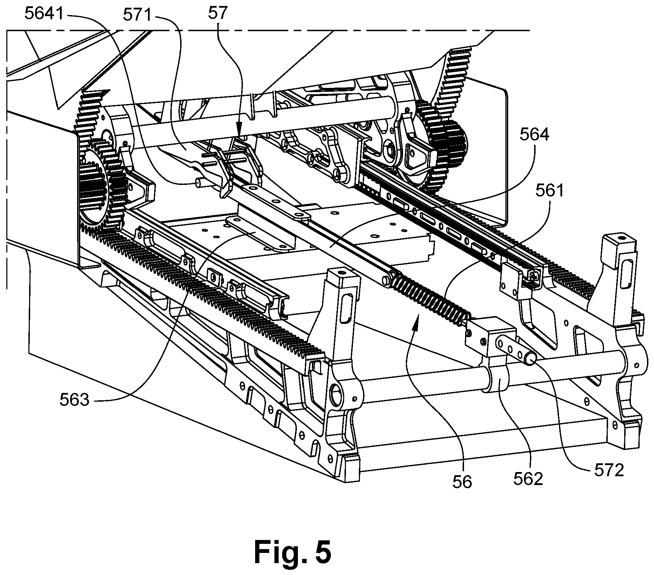

La figure 5 représente un exemple de moyen de compensation 56 et son moyen de réglage 57 qui peuvent être utilisé dans le mécanisme de conversion 50.

Selon cet exemple, le moyen de compensation 56 comprend un ressort de traction 561 monté entre un premier support 562 et un deuxième support 563, fixés tous deux à la structure fixe du siège 10, et une tige 564 reliant une extrémité dudit ressort au deuxième support 563.

La tige 564 est montée coulissante sur le deuxième support 563 et comprend une butée 5641 à son extrémité libre que le moyen de réglage 57 vient accrocher.

Le moyen de réglage 57 comprend à cet effet un crochet 571 fixé à l'assise 11, qui vient accrocher la butée 5641 de la tige 564 pour dilater le ressort 561.

Le crochet 571 peut être multiple, en comportant plusieurs creux, et accrocher la butée 5641 à différentes distances, cela permet de régler dynamiquement, le moyen de compensation 56 notamment par un curseur ou similaire accessible à l'équipage et/ou au passager.

Le réglage peut également être automatique en fonction du poids d'un passager correctement installé, les passagers les plus lourds nécessitant une force de rappel du moyen de compensation 56 plus importante.

Le moyen de réglage 57 peut également comporter une barre 572 fixée à l'extrémité du ressort 561, opposée à l'extrémité reliée à la tige 564, et dont la position est réglable dans le premier support 562.

En outre, le siège 10 comporte un système de sécurité, non représenté, pour éviter tout retour brutal du siège en l'absence de passager.

Après de nombreux tests, les inventeurs ont conclu qu'un angle de 6° pour la rampe 16 offre un bon compromis pour permettre au poids du passager concentré dans le bas de son corps de remonter lors d'une conversion du siège vers la position couchée.

Toutefois, d'autres valeurs de cet angle peuvent être adoptées. L'angle α dépend en effet de paramètres tels que l'incidence de l'avion en vol et la puissance des moyens de compensation utilisés. Cet angle doit être strictement positif, et de préférence compris entre 1° et 10°.

Le siège 10 ainsi décrit est donc convertible entre les différentes positions de façon complétement manuelle sans aucun apport extérieur d'énergie.

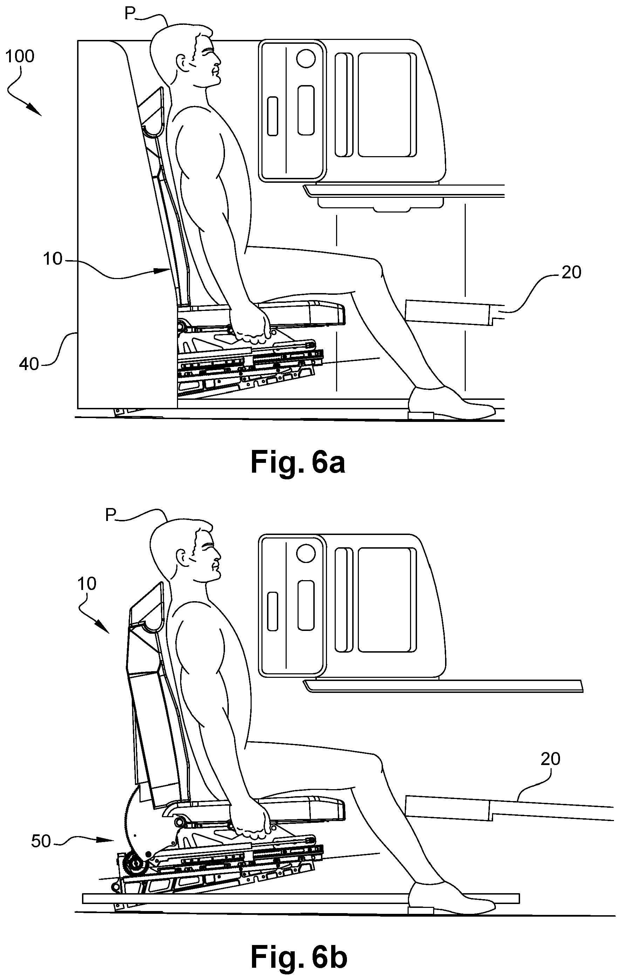

La figure 6a représente un passager P occupant le siège 10 en position assise dans son unité de siège 100, laquelle unité comportant une coque de séparation 40.

La figure 6b est une vue de la figure 5a sans une partie de la coque de séparation, pour laisser entrevoir le mécanisme de conversion manuelle 50. Le passager P a sa main droite posée sur le levier de déverrouillage du siège 10 et s'apprête à convertir ledit siège en position repos ou couchée.

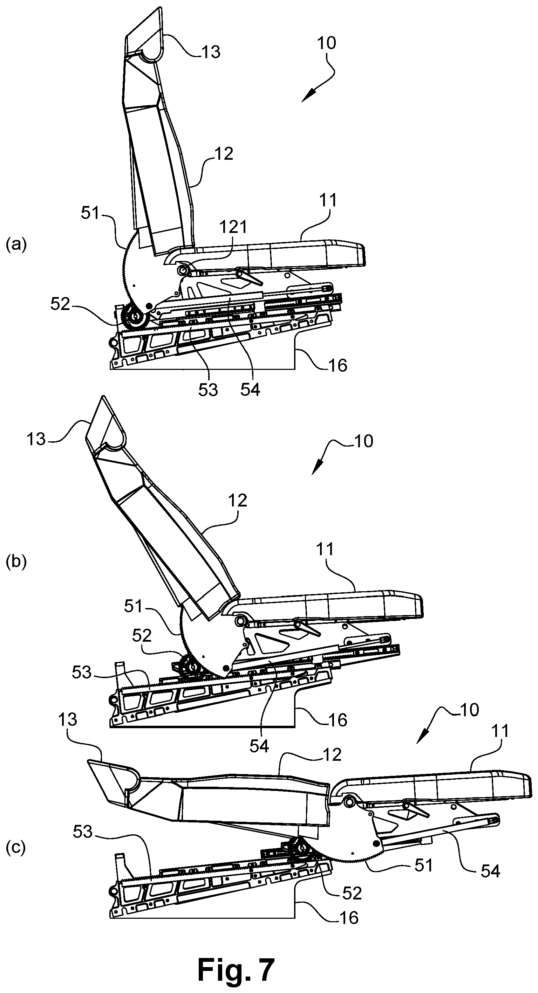

La figure 7 représente le siège 10 en position assise (a), en position repos (b) et en position couchée (c), en laissant visibles les éléments essentiels du mécanisme de conversion manuelle pour comprendre leurs déplacements les uns par rapport aux autres. Plus particulièrement, entre la position assise et la position couchée, le deuxième pignon 52 parcourt la crémaillère 53 d'une extrémité à l'autre, et le premier pignon 51 effectue environ un quart de tour autour de l'axe de basculement du dossier 12.

Il ressort de la présente description que certains éléments non essentiels du siège convertible peuvent être modifiés, remplacés ou supprimés sans pour autant sortir du cadre de l'invention défini par les revendications ci-après.

## Revendications

1. Siège (10) convertible pour passager d'un aéronef, tel qu'un avion de ligne, comportant une assise (11) et un dossier (12) mobiles entre une position assise et une position couchée, ledit siège comportant en outre un mécanisme (50) de conversion manuelle entre lesdites positions, actionnable par une action physique du passager au moyen d'un levier de déverrouillage (15), sans aucun apport d'énergie électrique, et **caractérisé en ce que** ledit mécanisme comprend des moyens de compensation d'effort (54, 56) configurés pour assister le passager à réaliser le mouvement de conversion du siège.

2. Siège selon la revendication 1, **caractérisé en ce qu'**il ne comprend aucun mécanisme motorisé pour actionner un quelconque mouvement de l'assise (11) ou du dossier (12).

3. Siège selon l'une quelconque des revendications précédentes, dans lequel le mécanisme (50) comprend, à chaque côté latéral du siège, un premier pignon (51) fixé au dossier (12), un deuxième pignon (52) couplé au premier pignon et une crémaillère (53) coopérant avec le deuxième pignon pour entraîner en translation l'assise (11) sous l'effet de la rotation du premier pignon.

4. Siège selon la revendication 3, dans lequel chaque deuxième pignon (52) est étagé et comprend une roue de grand diamètre (521) couplée à la crémaillère (53) et une roue de petit diamètre (522) couplée au premier pignon (51).

5. Siège selon l'une quelconque des revendications précédentes, dans lequel les moyens de compensation d'effort comprennent un ressort à gaz (54) fixé entre l'assise (11) et le dossier (12) pour assister le passager dans un mouvement de rotation dudit dossier.

6. Siège selon l'une quelconque des revendications précédentes, dans lequel les moyens de compensation d'effort comprennent au moins un ressort de traction (56) fixé entre l'assise (11) et une structure fixe du siège pour assister le passager dans un mouvement de translation de ladite assise.

7. Siège selon l'une quelconque des revendications précédentes, dans lequel le mécanisme (50) comprend en outre un moyen de blocage (55) fixé entre l'assise (11) et le dossier (12) pour maintenir le siège à n'importe quelle position entre la position assise et la position couchée.

8. Siège selon la revendication 7, dans lequel le moyen de blocage (55) est un positionneur linéaire.

9. Unité de siège (100) pour passager d'un aéronef, **caractérisée en ce qu'**elle comprend le siège (10) selon l'une quelconque des revendications précédentes, un élément d'extension (20) comprenant un ottoman (21) et une coque de séparation (40).

10. Aeronef **caractérisé en ce qu'**il comprend au moins l'unité de siège (100) selon la revendication précédente.

## Patentansprüche

1. Umwandelbarer Sitz (10) für einen Passagier eines Luftfahrzeugs, wie eines Verkehrsflugzeugs, der eine Sitzfläche (11) und eine Rückenlehne (12) aufweist, die zwischen einer Sitz- und einer Liegeposition beweglich sind, der ferner einen manuellen Umwandlungsmechanismus (50) zwischen den Positionen aufweist, der durch eine körperliche Betätigung des Passagiers mittels eines Entriegelungshebels (15) betätigbar ist, ohne jegliche elektrische Energiezufuhr, und **dadurch gekennzeichnet, dass** der Mechanismus Kraftausgleichsmittel (54, 56) umfasst, die so ausgebildet sind, dass sie den Passagier bei der Durchführung der Sitzumwandlung unterstützen.

2. Sitz nach Anspruch 1, **dadurch gekennzeichnet, dass** er keinen motorisierten Mechanismus zur Betätigung einer beliebigen Bewegung der Sitzfläche (11) oder der Rückenlehne (12) umfasst.

3. Sitz nach einem der vorhergehenden Ansprüche, wobei der Mechanismus (50) auf jeder seitlichen Seite des Sitzes ein erstes Ritzel (51) umfasst, das an der Rückenlehne (12) befestigt ist, ein zweites Ritzel (52), das mit dem ersten Ritzel gekoppelt ist, und eine Zahnstange (53), die mit dem zweiten Ritzel zusammenwirkt, um den Sitz (11) durch die Drehung des ersten Ritzels in Translation zu versetzen.

4. Sitz nach Anspruch 3, wobei jedes zweite Ritzel (52) gestuft ist und ein Rad mit großem Durchmesser (521), das mit der Zahnstange (53) gekoppelt ist, und ein Rad mit kleinem Durchmesser (522) umfasst, das mit dem ersten Ritzel (51) gekoppelt ist.

5. Sitz nach einem der vorhergehenden Ansprüche, wobei die Kraftausgleichsmittel eine Gasfeder (54) umfassen, die zwischen der Sitzfläche (11) und der Rückenlehne (12) befestigt ist, um den Passagier bei einer Drehbewegung der Rückenlehne zu unterstützen.

6. Sitz nach einem der vorhergehenden Ansprüche, wobei die Kraftausgleichsmittel mindestens eine Zugfeder (56) umfassen, die zwischen der Sitzfläche (11) und einer festen Struktur des Sitzes befestigt ist, um den Passagier bei einer Verschiebebewegung der Sitzfläche zu unterstützen.

7. Sitz nach einem der vorhergehenden Ansprüche, wobei der Mechanismus (50) ferner ein Verriegelungsmittel (55) umfasst, das zwischen der Sitzfläche (11) und der Rückenlehne (12) befestigt ist, um den Sitz in einer beliebigen Position zwischen der Sitzposition und der Liegeposition zu halten.

8. Sitz nach Anspruch 7, wobei das Verriegelungsmittel (55) ein linearer Positionierer ist.

9. Sitzeinheit (100) für einen Passagier eines Luftfahrzeugs, **dadurch gekennzeichnet, dass** sie den Sitz (10) nach einem der vorhergehenden Ansprüche, ein Erweiterungselement (20), umfassend einen Hocker (21) und eine Trennschale (40), umfasst.

10. Luftfahrzeug, **dadurch gekennzeichnet, dass** es mindestens die Sitzeinheit (100) nach dem vorhergehenden Anspruch umfasst.

## Claims

1. Convertible passenger seat (10) for an aircraft, such as an airliner, comprising a seat section (11) and a backrest (12) movable between a sitting position and a reclined position, further comprising a manual conversion mechanism (50) between said positions, capable of being actuated by a physical action of the passenger by means of an unlocking lever (15), without any electrical energy supply, and **characterized in that** said mechanism comprises force compensation means (54, 56) configured to assist the passenger in carrying out the seat conversion movement.

2. Seat according to claim 1, **characterized in that** it does not comprise any motorized mechanism for actuating any movement of the seat section (11) or the backrest (12).

3. Seat according to any one of the preceding claims, wherein the mechanism (50) comprises, on each lateral side of the seat, a first pinion (51) fastened to the backrest (12), a second pinion (52) coupled to the first pinion and a rack (53) cooperating with the second pinion for driving the seat (11) in translation under the effect of the rotation of the first pinion.

4. Seat according to claim 3, wherein each second pinion (52) is staged and comprises a large-diameter wheel (521) coupled to the rack (53) and a small-diameter wheel (522) coupled to the first pinion (51).

5. Seat according to any one of the preceding claims, wherein the force compensation means comprise a gas spring (54) fastened between the seat (11) and the backrest (12) for assisting the passenger in a rotational movement of said backrest.

6. Seat according to any one of the preceding claims, wherein the force compensation means comprise at least one draw spring (56) fastened between the seat section (11) and a fixed structure of the seat for assisting the passenger in a translational movement of said seat.

7. Seat according to any one of the preceding claims, wherein the mechanism (50) further comprises a locking means (55) fastened between the seat section (11) and the backrest (12) for holding the seat in any position between the sitting position and the reclined position.

8. Seat according to claim 7, wherein the locking means (55) is a linear positioner.

9. Aircraft passenger seat unit (100), **characterized in that** it comprises the seat (10) according to any one of the preceding claims, an extension element (20) comprising an ottoman (21) and a partition shell (40).

10. Aircraft **characterized in that** it comprises at least one seat unit (100) according to the preceding claim.
